# EUROPEAN PATENT SPECIFICATION

(11) **EP 0 945 497 B1**
(45) Date of publication and mention of the grant of the patent: **13.12.2006**
(21) Application number: 99660052.4
(22) Date of filing: 24.03.1999
(51) Int. Cl.: C09D 161/06

(54) **Reactive phenolic coating**
Reaktive Beschichtungszusammensetzungen auf Basis von Phenolharz
Composition de revêtement phénolique réactif

(30) Priority: 25.03.1998 FI 980672
(43) Date of publication of application: 29.09.1999
(73) Proprietor: Dynea Overlays Oy, 82430 Puhos (FI)
(72) Inventor: Lipponen, Juha, 82430 Puhos (FI); Lintumäki, Timo, 82430 Puhos (FI); Rainio, Jouni, 82430 Puhos (FI); Silventoinen, Ilpo, 82430 Puhos (FI)
(74) Representative: Partio, Erja

(56) References cited:
- EP-A- 0 209 203
- DE-A- 1 653 266
- JP-A- 61 103 935
- US-A- 4 520 167
- US-A- 4 961 795
- US-A- 4 977 231

## Description

The present invention relates to use of a phenolic coating as defined in claim 1, as a coating.

The use of resols having a molar ratio of formaldehyde/phenol (F/P) exceeding 1, typically 1,0 - 3,0, as wood cement, moulding material, cast mould agglutinant and for impregnation of paper and the like in conjunction with the production of coatings is previously known. Resols are typically cured in alkaline conditions in a pH range of 7 - 13. Depending on the use, a typical degree of alkalinity is 0,5 - 8 %, calculated for liquid resin. In the present description, alkalinity is expressed in terms of sodium hydroxide.

Prior-art coatings are generally made from resin, paper and additives. Other materials besides paper can also be used. The resin contained in the coatings is cured by the action of heat. Usually the curing is accomplished in a press under pressure.

The problem with prior-art coatings is that they require a long pressing time and a high pressing temperature for curing. A high pressing temperature of the coating may result e.g. in cracking of the plain joints of plywood, which are generally glued at a surface temperature of about 130 °C.

It is generally known that the reactivity of a phenolic coating can be increased by increasing the molar ratio (F/P) of the phenolic resin and the alkalinity of the resin composition.

Research work done in the 1970's regarding the curing of phenol formaldehyde resins used in casting moulds indicated that strongly alkaline conditions accelerate the curing process. At the same time, it was established that by adding to the resin a considerable amount of an ester, such as propylene carbonate, methyl formate and glycerol triacetate, very short curing times can be achieved. This method is used in the production of foundry resin and it has also been applied to glues used in board manufacture. It has been established that in board glues an increased alkalinity reduces the curing rate of the resin while simultaneous addition of polycarbonates increases it. (Pizzi, A. and Stephanou, A., On the Chemistry, Behaviour and Cure Acceleration of Phenol-Formaldehyde Resins Under Very Alkaline Conditions, Journal of Applied Polymer Science, vol 49, 1993, pp. 2157-2170). However, an excessive curing rate has its drawbacks, such as too short a time for using and working. To retard the very fast resin curing catalysed by an ester, such as propylene carbonate, various expedients have been used, e.g. a latent catalyst (US 4977231), dissolving the ester in formaldehyde (US 3949149), using nitroalkane as a retarder (US 5281644) or mixing the ester with the resin just before application of the resin (US 4961795). Esters have not been used in phenolic coatings.

The object of the present invention is to eliminate the drawbacks described above.

A specific object of the present invention is to disclose a reactive phenolic resin coating and a method for the production of such coating, in which the pressing of the phenolic coating can be effected in a shorter pressing time and/or at a lower pressing temperature than before.

A further object of the invention is to disclose a reactive phenolic resin coating and a method for the production of such a coating, a coating whose precuring does not take place too quickly before the curing, i.e. which does not cure too soon before the press is closed.

The invention is based on research work carried out in order to apply an ester curing technique to phenolic coatings. It was established in the investigations that ester-catalysed curing does not take place immediately but only during pressing.

The us of a phenolic coating of the invention is characterised by what is presented in claim 1.

The alkaline resin composition of the phenolic coating of the invention contains an ester, its derivative or a mixture of these. The dosage of the ester, its derivative or the mixture of these is about 0,4 - 5,0 % of the liquid resin, preferably 0,5 - 2,0 %, more preferably about 1 %. The dry matter content of the resin composition is 45 - 60 %, typically about 50 %. The resin composition must be alkaline. Its degree of alkalinity must be over 1 % as calculated for liquid resin to allow the advantages of the invention to appear and the ester to accelerate the curing of the resin. A preferable degree of alkalinity is 1,5 - 3,0 %. An excessive alkalinity percentage may cause manufacturing problems or it may result in a phenolic coating that is too reactive with respect to the working conditions.

The resin used in the phenolic coating is a resol with a molar ratio of formaldehyde/phenol (F/P) in the range of 1 - 3. According to known techniques, the reactivity can be improved by increasing the molar ratio and alkalinity of the resin composition. The properties of the resin, such as molar ratio within the above-mentioned limits, molar mass or degree of condensation, are not essential to the invention. For each particular use, a resin is selected that is best applicable for the purpose. In choosing the resin, the treatment, impregnation and drying process of the resin mixture as well as the end use are taken into account. The resin solvent used may be any solvent in which resin is soluble. The most typical resin solvents are water and/or alcohol, such as e.g. methanol and ethanol.

The phenolic coating may also contain other additives normally used, such as surface active substances to improve the absorption of the resin, colourants to give the coating a desired colour and/or release agents to prevent adhesion of the coating to the press plates.

The alkali used in the phenolic coating may be any hydroxide, oxide and/or carbonate used as catalyst with phenolic resins, e.g. a hydroxide, oxide and/or carbonate of an alkali metal or an alkaline earth metal. A preferred alkali is NaOH or KOH and/or a mixture of these.

In the invention, ester refers to compounds containing a functional ester group, such as lactones, organic carbonates, carboxylic acid esters, their derivatives and/or mixtures. Suitable esters are listed e.g. in specification US 4961795 (column 4, paragraph 2). Derivatives of esters refers to reaction products of compounds containing a functional ester group e.g. with suitable alkalis, such as ammonia and/or amines.

In an embodiment of the phenolic coating, the ester in the resin composition is a lower alkylene carbonate, preferably propylene carbonate.

In an embodiment of the phenolic coating, the ester derivative in the resin composition is a carbamate derivative produced in a reaction between a lower alkylene carbonate and ammonia and/or amine, preferably hydroxypropyl carbamate, a reaction product of propylene carbonate and ammonia. The carbamate derivative formed is a so-called latent catalyst, the use of which as a catalyst in resin results in a somewhat slower curing of the resin as compared with curing catalysed by an ester.

In an embodiment of the phenolic coating, the mixture of an ester and its derivative is a mixture of a lower alkyl carbonate and its carbamate derivative, preferably a mixture of propylene carbonate and hydoxypropyl carbamate.

The ester, its derivative or the mixture of these is added to the resin composition together with other additives and/or it can be added to the resin composition in an in-line manner, i.e. just before the application of the resin composition e.g. by immersion in a basin containing the resin composition or by some other method.

The properties of the resol in the phenolic coating can be altered by modifying resin with urea, melamine, lignin, resorcinol, modified phenols, cresols, bisphenol and/or other corresponding compounds. The modifying substances have no effect on the reactivity of the coating of the invention.

The resin composition of the phenolic coating contains one or more resols as described above.

In an embodiment of the phenolic coating, the coating comprises a plurality of resin composition layers. In this case, the matrix is impregnated with the resin composition in several stages and the resin composition layer is allowed to dry partially or completely between stages. Preferably two or more resin composition layers are used in the phenolic coating. A matrix impregnated with a first resin composition layer is partially dried before application of the next resin composition layer.

The resin composition layers of the phenolic coating may consist of various resin compositions. The alkalinity of the resin composition layer and the amount of ester, its derivative or mixture of these may vary. In the phenolic coating, the resin composition layer that lies against the matrix preferably contains most of the alkali, and the resin composition layer at the surface preferably contains most of the ester, its derivative or the mixture of these, or vice versa. Thus, there is actually no contact between the two factors influencing the reactivity of the coating, so they are not mixed up before the final use, i.e. pressing. A relatively high-alkali resol in itself or a low-alkali resol with a high content of ester, its derivative or mixture of these is not sufficiently reactive. Conditions favourable to the reaction are only achieved when the resins are combined during the pressing.

The matrix of the phenolic coating of the invention mainly consists of paper, glass fibre, polyester mat, cellulose, synthetic fibres, non-woven type fabric, other material used as matrix and/or a mixture of these. The matrix typically consists of paper/cardboard having a grammage in the range of 20 - 340 g/m², preferably 20 - 40 g/m² for gluing and 40 - 150 g/m² for coating applications.

In the method of the invention for the production of a phenolic coating, the matrix is impregnated with an alkaline resin composition as described above and the impregnated matrix is dried.

The phenolic coating of the invention can be produced by using a machine designed and constructed for this purpose, in which a matrix, e.g. of paper, is fed from an unwinder via auxiliary rollers to a basin containing resin composition. In the basin, the paper is moisturised and impregnated with the resin composition. The amount of resin composition is adjusted to a suitable level by means of a doctor knife or press rollers. The impregnated paper is passed to the drying section of an impregnating machine, where the solvent is removed. The drying is so implemented that the coating does not come into contact with the drier, e.g. by an airborne web drying technique. After being dried, the coating is cooled down and cut into sheets or rolled up.

The resin contained in the phenolic coating of the invention is cured by the action of heat. Usually the curing is effected in a press under pressure. The curing may also be accomplished by any known curing method, e.g. by using RF heating, IR radiation and/or microwave radiation.

Phenolic coatings as provided by the invention are used for coating plywood, chipboard, MDF, OSB and/or other board products, for gluing other coatings, veneers and thin cellulose-based sheets on the above-mentioned base materials and/or on metal, such as aluminium, in plywood manufacture, as base layers for other coatings e.g. to improve impact strength or cracking resistance, as laminating material; in the manufacture of tubes, e.g. paint rollers, various cellular products, e.g. so-called honeycombs, and similar products. The resin composition of the invention can also be used as the gluing component (so-called glueline) of a coating, e.g. in so-called MDO coatings.

The usability of the coated or glued product depends on the degree of cure of the phenolic resin used. Almost invariably the resin must be completely polymerised (cured) to provide the desired properties, such as strength, water resistance and weather resistance.

The phenolic coating of the invention is typically used for the coating of board products, such as plywood. The phenolic coating is pressed onto the plywood with a pressure of about 14 - 18 kg/cm² and at a temperature of 125 - 165 °C (surface temperature), whereupon the resin is allowed to cure. The time required for the curing is 20 s - 3 min., depending on the thickness of the board and the properties of the resin. For prior-art phenolic coatings, the corresponding times are about 35 s - 8 min.

The invention provides the advantage of a shorter pressing time at a corresponding pressing temperature and/or a lower pressing temperature with a corresponding coating capacity. The invention allows the coating capacity of a coating plant to be increased and/or the amount of product defects due to a high pressing temperature to be reduced.

In the following, the invention will be described in detail by the aid of a few examples.

### EXAMPLE 1

This experiment was carried out to test the effects of alkalinity and propylene carbonate (PC) on the change in the number-average and weight-average molar mass (Mn and Mw) of a phenol-formaldehyde resin composition during drying.

Table 1 presents some properties of formaldehyde resins A and B and the change in Mw and Mn.

**Table 1.**

| | Resin A | Resin 3 | Resin B |
|---|---|---|---|
| Molar ratio (F/P) | <2 | >2 | >2 |
| Alkalinity, % | about 3 | about 2,8 | about 2,8 |
| PC, % | 1 | 1 | 0 |
| Mn (change) | about 290 | about 500 | about 140 |
| Mw (change) | about 760 | about 2500 | about 670 |

As can be seen from Table 1, the changes in the resin compositions Mn and Mw are small as compared with tests in which no propylene carbonate was used. PC does not catalyse a notable increase in molar mass during drying if the drying conditions are properly adjusted. For resin B, the increase in molar mass is larger because of the higher molar ratio. The properties of the resin, the amounts of alkali and PC can be used to influence the development of molar mass and they are chosen so as to suit the production process and the intended application.

### EXAMPLE 2

Trial runs were performed to test the effect of alkalinity and propylene carbonate (PC) on the curing of phenol formaldehyde resin A at two different alkalinity levels with and without PC (tests 1A - 1B+PC).

The degree of cure of the coating was determined by a lye test method, which is based on the property of NaOH to corrode partially cured phenolic resin. In the method, 5-% NaOH solution was allowed to remain in contact with the coating under testing for two hours. If the surface became soft, then the resin had not been completely cured. The degree of cure (maturity) is rated using grades 0...-3, where 0 means completely cured and -1...-3 mean undercured.

The resin composition and its properties are presented in Table 2.

**Table 2.**

| | 1A | 1A+PC | 1B | IB+PC |
|---|---|---|---|---|
| Resin (kg) | 980 | 980 | 980 | 980 |
| Release agent(kg) | 11 | 11 | 11 | 11 |
| Surface-active agent (kg) | 0,35 | 0,35 | 0,7 | 0,7 |
| KOH (kg, 30% solution) | 50 | 50 | 80 | 80 |
| PC (kg) | - | 10 | - | 10 |
| Alkalinity(%) | 2,36 | 2,37 | 2,85 | 2,83 |
| pH | 9,61 | 9,44 | 9,82 | 9,68 |
| Viscosity (mPas) | | 58 | 56 | 58 |

Table 3 presents the degree of cure of the coatings resulting from the action of the pressing temperature.

**Table 3.**

| | 1A | 1A+PC | 1B | 1B+PC |
|---|---|---|---|---|
| 3min/130°C | -1 | 0 | -1 | 0 |
| 2.5min/130°C | -2 | -1 | -2 | -1 |
| 30s/165°C | -2 | 0 | -2 | 0 |
| 25s/165°C | -3 | 0 | -3 | 0 |
| 20s/165°C | -3 | -1(0) | -3 | -1(0) |

Table 3 shows that PC increased the reactivity of the phenolic coating. Resin containing PC cured in 25 seconds at a temperature of 165°C and in 3 minutes at a temperature of 130°C. A difference of about 0,5 units in the alkalinity does not produce the desired change in the curing rate. PC has a decided effect on the reactivity of the coating. The amounts of volatile components of the phenolic coating were kept below 7,5 % and the appearance of the coating was good.

### EXAMPLE 3

This experiment was carried out to test the effect of hydroxypropyl carbamate (HPC) on the degree of cure of the phenolic coating. The HPC was produced by letting propylene carbonate react with liquid ammonia. In the experiment, resin A as in example 1 was used. In other respects, the composition of the resin mixture corresponded to composition 1B in example 2, and the HPC concentrations in the composition were 0, 1, 3 and 5 %.

Table 4 presents the degree of cure of the coating for different pressing temperatures and pressing times.

**Table 4**

| | HPC content | | | |
|---|---|---|---|---|
| | 0 % | 1 % | 3 % | 5 % |
| 20s/165°C | -3 | -1 | 0 | 0 |
| 25s/165°C | -3 | 0 | 0 | 0 |
| 30s/165°C | -1 | 0 | 0 | 0 |
| 35s/165°C | 0 | 0 | 0 | 0 |
| 2min45s/130°C | -2 | -1 | 0 | 0 |
| 3min30s/130°C | 0 | 0 | 0 | 0 |

As can be seen from the results in Table 4, resin containing HPC cured in 25 seconds at a temperature of 165°C and in 3,5 minutes at a temperature of 130°C.

A coating containing 1 % PC is somewhat more reactive than a coating containing 1 % HPC. This is natural because the concentration of PC, which is assumed to be the real active reactant, in the coating is 0,85 % when 1 % HPC is added.

### EXAMPLE 4

In this experiment, the effect of PC on the curing of the phenolic coating was tested with the lowest degrees of alkalinity. The experiment was carried out using resin compositions produced from phenol formaldehyde resin C, which has a molar ratio <2, and having alkalinity percentages of 1,25 and 1,50 %. The PC dosages used were 0 and 1 %.

The reactivity of the coatings predetermined were established by determining the shortest pressing time that results in complete curing (minimum pressing time) of the coating at the temperature used. The measured temperature as 160 °C.

Table 5 presents the minimum pressing time of the coating as a result of alkalinity.

**Table 5**

| | PC 0% | PC 1% |
|---|---|---|
| Alkalinity 1,25% | 65 s | 40 s |
| Alkalinity 1,50% | 60 s | 35 s |

From the results in Table 4, it can be seen that, as expected, the minimum pressing time is shortened (by 8 %) as alkalinity is increased. When PC is used, the minimum pressing time is reduced by a substantial amount, about 38 - 42 %.

### EXAMPLE 5

In this experiment, the minimum pressing time for two different coatings was tested. The resin composition of a first coating corresponded to resin composition 1B+PC in example 2, and in a second coating resin composition 2A, resin A was replaced with phenol formaldehyde resin D, which has a molar ratio >2.

The coatings were applied to plywood by pressing at different temperatures and for different lengths of time. The temperature measurements were taken between the coating and the press plate at the end of the pressing period. Based on the pressing periods, minimum pressing times for different temperatures were determined.

Table 6 presents minimum pressing times for coatings 1B+PC and 2A at different temperatures.

**Table 6**

| | 1B+PC | 2A |
|---|---|---|
| 121 °C | 6 min | 5 min 30 s |
| 125 °C | 4 min | * |
| 131 °C | 2 min | * |
| 136 °C | 1 min 15 s | * |

| | | |
|---|---|---|
| * Not determined in this test | | |

The invention is not restricted to the examples of its embodiments described above, but many variations are possible within the scope of the inventive idea defined by the claims.

## Claims

1. Use as a coating of a matrix which has been impregnated with an alkaline resin composition containing a resol with a molar ratio of formaldehyde/phenol in the range 1 - 3 and dried, **characterised in that** the resin composition contains an ester, its derivative or a mixture of these in an amount of about 0,4 - 5,0 % calculated for liquid resin, and that the alkalinity of the resin composition exceeds 1 % calculated for liquid resin.

2. Use as defined in claim 1, **characterised in that** the amount of ester, its derivative or their mixture contained in the resin composition is 0,5 - 2,0 %, preferably about 1 %.

3. Use as defined in claim 1 or 2, **characterised in that** the composition has an alkalinity of 1,5 - 3,0 %.

4. Use as defined in any one of claims 1 - 3, **characterised in that** the alkali is a hydroxide, oxide and/or carbonate of an alkali metal and/or alkaline earth metal, preferably NaOH or KOH and/or a mixture of these.

5. Use as defined in any one of claims 1 - 4, **characterised in that** the ester, its derivative or their mixture is a lower alkylene carbonate, its carbamate derivative or a mixture of these.

6. Use as defined in any one of claims 1 - 5, **characterised in that** the ester, its derivative or their mixture is propylene carbonate, hydroxypropyl carbamate or a mixture of these.

7. Use as defined in any one of claims 1 - 6, **characterised in that** the resol has been modified with urea, melamine, lignin, resorcinol, modified phenols, cresols, bisphenol and/or other corresponding compounds.

8. Use as defined in any one of claims 1 - 7, **characterised in that** the resin composition contains one or more resols.

9. Use as defined in any one of claims 1 - 8, **characterised in that** the coating comprises a plurality of resin composition layers.

10. Use as defined in claim 9, **characterised in that** the resin compositions in different layers have varying degrees of alkalinity and contain varying amounts of ester, its derivative or their mixture.

11. Use as defined in any one of claims 1 - 10, **characterised in that** the matrix mainly consists of paper, glass fibre, polyester mat, cellulose, synthetic fibres, non-woven type fabric and/or a mixture of these.

12. Use as defined in any one of claims 1 - 11, **characterised in that** the matrix consists of paper.

## Patentansprüche

1. Verwendung einer Matrix als eine Beschichtung, die mit einer alkalischen Harzzusammensetzung imprägniert wurde, die ein Resol mit einem molaren Verhältnis von Formaldehyd/Phenol in dem Bereich von 1 - 3 enthält, und getrocknet ist, die **dadurch gekennzeichnet ist, dass** die Harzzusammensetzung einen Ester, dessen Derivat oder eine Mischung von diesen in einer Menge von ungefähr 0,4 - 5,0 % berechnet für das flüssige Harz enthält, und dass die Alkalinität der Harzzusammensetzung 1% wie für das flüssige Harz berechnet überschreitet.

2. Verwendung, wie sie in Anspruch 1 definiert wird, die **dadurch gekennzeichnet ist, dass** die Menge an Ester, dessen Derivat oder deren Mischung, die in der Harzzusammensetzung enthalten ist, 0,5 - 2,0 %, vorzugsweise ungefähr 1% beträgt.

3. Verwendung, wie sie in Anspruch 1 oder 2 definiert wird, die **dadurch gekennzeichnet ist, dass** die Zusammensetzung eine Alkälinität von 1,5 - 3,0% aufweist.

4. Verwendung, wie sie in einem der Ansprüche 1 - 3 definiert wird, die **dadurch gekennzeichnet ist, dass** das Alkali ein Hydroxid, Oxid und/oder Carbonat eines Alkalimetalls und/oder eines Erdalkalimetalls, vorzugsweise NaOH oder KOH und/oder eine Mischung von diesen ist.

5. Verwendung, wie sie in einem der Ansprüche 1 - 4 definiert wird, die **dadurch gekennzeichnet ist, dass** der Ester, dessen Derivat oder deren Mischung ein niederes Alkylencarbonat, dessen Carbamat, Derivat oder eine Mischung von diesen ist.

6. Verwendung, wie sie einem der Ansprüche 1 - 5 definiert wird, die **dadurch gekennzeichnet ist, dass** der Ester, dessen Derivat oder deren Mischung Propylencarbonat, Hydroxypropylcarbamat oder eine Mischung von diesen ist.

7. Verwendung, wie sie in einem der Ansprüche 1 - 6 definiert wird, die **dadurch gekennzeichnet ist, dass** das Resol mit Harnstoff, Melamin, Lignin, Resorcin, modifizierten Phenolen, Kresolen, Bisphenol und/oder anderen korrespondierenden Verbindungen modifiziert wurde.

8. Verwendung, wie sie einem der Ansprüche 1 - 7 definiert wird, die **dadurch gekennzeichnet ist, dass** die Harzzusammensetzung ein oder mehrere Resole enthält.

9. Verwendung, wie sie einem der Ansprüche 1 - 8 definiert wird, die **dadurch gekennzeichnet ist, dass** die Beschichtung eine Vielzahl von Harzzusammensetzungsschichten umfasst.

10. Verwendung, wie sie in Anspruch 9 definiert wird, die **dadurch gekennzeichnet ist, dass** die Harzzusammensetzungen in verschiedenen Schichten unterschiedliche Grade an Alkalinität aufweisen und unterschiedliche Mengen an Ester, dessen Derivat oder deren Mischung enthalten.

11. Verwendung, wie sie einem der Ansprüche 1 - 10 definiert wird, die **dadurch gekennzeichnet ist, dass** die Matrix hauptsächlich aus Papier, Glasfaser, Polyestermatte, Zellulose, synthetischen Fasern, fliesgewebeartigem Stoff und/oder einer Mischung aus diesen besteht.

12. Verwendung, wie sie einem der Ansprüche 1-11 definiert wird, die **dadurch gekennzeichnet ist, dass** die Matrix aus Papier besteht.

## Revendications

1. Utilisation comme revêtement une matrice qui a été impregnée d'une composition de résine alcaline contenant un resol dans une proportion molaire de formaldéhydé/phénol 1 - 3 et sechée, **caractérisée en ce que** la composition de résine contient un ester, le dérivé d'un ester ou un mélange de ceux-ci dans une quantité d'environ 0,4 - 5,0 % calculée pour la résine liquide, et que l'alcalinité de la composition de résine excède 1 % calculée pour la résine liquide.

2. Utilisation comme définie dans la revendication 1, **caractérisée en ce que** la quantité d'ester, du dérivé d'ester ou de leur mélange dans la composition de résine est de 0,5 - 2,0 %, de préférence environ 1 %.

3. Utilisation comme définie dans la revendication 1 ou 2, **caractérisée en ce que** la composition a une alcalinité de 1,5 - 3,0 %.

4. Utilisation comme définie dans l'une des revendications 1 - 3, **caractérisée en ce que** l'alcali est un hydroxyde, un oxyde et/ou un carbonate de métal alcalin et/ou d'un métal alcalino-terreux, de préférence NaOH ou KOH et/ou un mélange de ceux-ci.

5. Utilisation comme définie dans l'une des revendications 1 - 4, **caractérisée en ce que** l'ester, le dérivé d'un ester ou un mélange des deux est un carbonate d'alcyléne infèrieur, son dérivé carbamate ou un mélange de ceux-ci.

6. Utilisation comme définie dans l'une des revendications 1 - 5, **caractérisée en ce que** l'ester, le dérivé d'un ester ou leur mélange est un carbonate de propyléne, hydroxypropyl carbamate ou un mélange de ceux-ci.

7. Utilisation comme définie dans l'une des revendications 1 - 6, **caractérisée en ce que** le resol a été modifié avec urée, mélamine, lignine, resorcinol, les phénols modifiés, cresols, bisphénol et/ou autres compositions correspondantes.

8. Utilisation comme définie dans l'une des revendications 1 - 7, **caractérisée en ce que** la composition de résine contient un ou plusieurs résols.

9. Utilisation comme définie dans l'une des revendications 1 - 8, **caractérisée en ce que** le revêtement comprend plusieurs couches de composition de résine.

10. Utilisation comme définie dans la revendication 9, **caractérisée en ce que** les compositions de résine dans les couches différentes ont des degrés variables d'alcalinité et contiennent des quantités variables d'ester, d'un derivé d'ester ou de leur mélange.

11. Utilisation comme définie dans l'une des revendications 1 - 10, **caractérisée en ce que** le matrice est composée principalement du papier, du fibre de verre, du tapis en polyester, de la cellulose, de fibres synthètiques, de tissue de type non-tissé et/ou d'un mélange de ceux-ci.

12. Utilisation comme définie dans l'un des revendications 1 - 11, **caractérisée en ce que** la matrice est composée du papier.
